# EUROPÄISCHE PATENTANMELDUNG

(11) **EP 0 877 520 A1**
(43) Veröffentlichungstag der Anmeldung: **11.11.1998**
(21) Anmeldenummer: 97107660.9
(22) Anmeldetag: 09.05.1997
(51) Int. Cl.: H04M 3/42

(54) **Verfahren zur Kommunikationssteuerung in einem Netz**

(71) Anmelder: SIEMENS AKTIENGESELLSCHAFT, 80333 München (DE)
(72) Erfinder: Schmidt, Christian, Dipl.Math., 86163 Augsburg (DE); Lange, Thomas, Dipl. Ing., 84034 München (DE); Kurzawa, Hendrik, Dr.rer.nat., 81379 München (DE); Ungruh, Joachim, 80638 München (DE); Krob, Silvia, Dipl.Phys., 80801 München (DE); Lindenthal, Andreas, 81247 München (DE)

(57) **Zusammenfassung**

Wenn ein analoger Telefonteilnehmer sich über eine Modem-Verbindung in einer Internetsitzung befindet, ist er telefonisch nicht erreichbar. Mit der Erfindung wird eine Benachrichtigung über einen während der Internetsitzung ankommenden Telefon-Dienst ermöglicht.

## Beschreibung

Wenn ein analoger Telefonteilnehmer sich über eine Modem-Verbindung in einer Internetsitzung befindet, ist er telefonisch nicht erreichbar, da er keinen Zweiten Nutzkanal besitzt. Eine Möglichkeit, den Teilnehmer über einen ankommenden Ruf zu informieren existiert bei der herkömmlichen Technik nicht, da in die bestehende Modem-Verbindung hinein keine Information zum Teilnehmer übertragen werden kann.

Als Resultat dieses Zustands gehen Verbindungsversuche dritter Teilnehmer zu dem erwähnten Internet Teilnehmer zu Verlust. Der Internet Teilnehmer bekommt weiterhin keinerlei Information über in der Zeit seiner Internet-Sitzung ankommende Gesprächsversuche Dritter.

Der Erfindung liegt die Aufgabe zugrunde, ein Verfahren anzu geben, durch das die genannten Probleme überwunden werden.

Mit der Erfindung wird eine Kommunikation zwischen dem Telefon-Ortsamt des Internet Teilnehmers und dem Internet Teilnehmer über die Internet Sitzung ermöglicht. Mit Hilfe dieser Kommunikation können Informationen (wie z.B. über ankommende Rufe und Rufnummer der Anrufer) an einen Teilnehmer über dessen Nutzkanal übertragen werden, über den er sich gleichzeitig in einer Internet Sitzung befindet.

Die Erfindung ist insbesondere für einen Analog-Teilnehmer vorteilhaft, da dieser nur über einen einzigen Nutzkanal verfügt, d.h. keinen zweiten Nutzkanal und auch keinen D-Kanal.

Eine Ausführungsform der Erfindung ist durch Anspruch 2 angegeben. Nach dieser Ausführungsform der Erfindung ist es für einen Teilnehmer möglich, die Entscheidung, ob er einen ankommenden Ruf annehmen will, an das Ortsamt zu übertragen, damit dieses den Ruf gegebenenfalls zustellt.

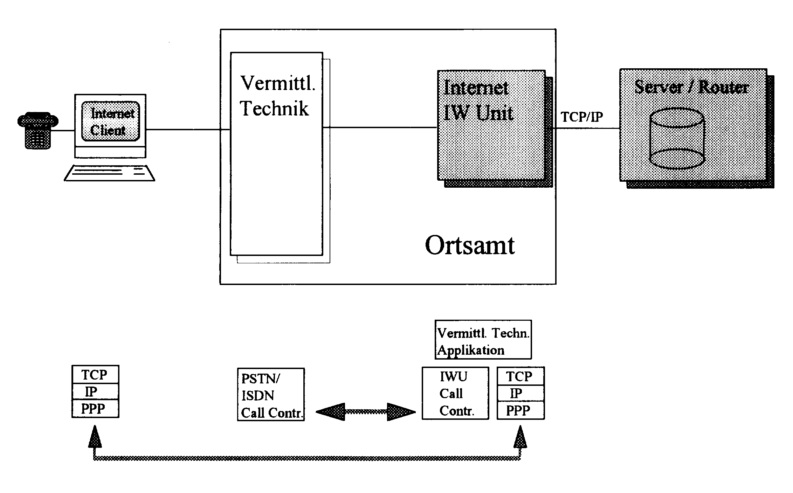

Im folgenden wird ein Ausführungsbeispiel der Erfindung anhand der Zeichnung näher erläutert. Die Zeichnung umfaßt eine Figur.

Die Figur zeigt die prinzipielle Technik der Erfindung. Im Ortsamt ist eine sogenannte Internet Interworking Unit IWU integriert, die den Einwahlknoten (Point of Presence, POP) ins Internet realisiert und die Modemprotokolle der analogen Teilnehmer abschließt (Modempool ist in der IWU integriert).
Die IWU ist in der Regel über einen ISDN-Primärmultiplexanschluß (ISDN Primary Rate Interface, ISDN-PRI) mit der Vermittlungstechnik verbunden (wie eine Nebenstellenanlage). Nachrichten zwischen IWU und Vermittlungstechnik werden über den D-Kanal ausgetauscht.

Um die Kommunikation zu ermöglichen, schickt nach dem Einloggen des Teilnehmers die IWU die dynamische IP Adresse zur Vermittlungstechnik, wo sie für das weitere Vorgehen gespeichert wird.

Soll eine Nachricht von der 'Vermittlungs-Technik' zu einem Internet Teilnehmer geschickt werden (z.B. zur Information über ankommende Rufe), so wird diese Information von der 'Vermittlungstechnik' an die Internet IWU weitergeschickt (D-Kanal Nachricht). Die Nachricht enthält die dynamische IP Adresse des betroffenen Teilnehmers. In der IWU wird die Nachricht in ein IP-Paket umgewandelt und an den Teilnehmer geschickt (TCP/IP/PPP oder UDP/IP/PPP).
In umgekehrter Richtung wird von dem Teilnehmer ein IP-Paket mit einer speziellen Applikationsnummer an die IWU geschickt.
Die spezielle Applikation wandelt das IP-Paket in eine Nachricht um, die z.B. über den D-Kanal an die Vermittlungstechnik weitergeschickt wird.

Ist die IWU nicht im Ortsamt des Internet Teilnehmers, sondern in einer anderen Vermittlungsstelle, so werden die Nachrichten zwischen den Vermittlungsstellen über die Protokolle SCCP und/oder TCAP ausgetauscht. Anhand der E.164 Nummer des Teilnehmers und der E.164 Nummer der IWU wird die Wegeauswahl getroffen.

Mit dieser Kommunikationsmöglichkeit können Teilnehmer-Leistungsmerkmale wie z.B. 'Anklopfen bei Internet Teilnehmern' realisiert werden.

Dem mit dem Internet Einwählpunkt verbundenen Teilnehmer kann bei einem ankommenden Ruf eine Information über diesen Ruf gegeben werden. Der Teilnehmer gibt seinen Wunsch, das Gespräch anzunehmen oder nicht anzunehmen an die Vermittlungsstelle weiter, die daraufhin den ankommenden Ruf zustellt oder ablehnt.

Durch die Erfindung wird die Übertragung einer Nachricht zu einem Internet-Teilnehmer vom Ortsamt über den bestehenden Nutzkanal ermöglicht. Dazu wird im Ortsamt eine Nachricht zum Internet Einwählknoten geschickt, dort in ein IP-Paket umgewandelt und über die Verbindung des Teilnehmers zum Internet zu dem Teilnehmer selbst geschickt. Mit demselben Mechanismus erfolgt der Informationsweg vom Teilnehmer zum Ortsamt. Der Teilnehmer schickt ein IP-Paket an den Einwahlknoten, dieser wandelt das IP-Paket in eine Nachricht um, die zum betreffenden Ortsamt geschickt wird.

Wichtig bei diesem Mechanismus ist es, daß das betreffende Ortsamt des Teilnehmers von dem Einwahlknoten die Kenntnis darüber bekommt,
- daß der Teilnehmer sich in einer Internet Sitzung befindet, und
- welche dynamisch zugeordnete IP Adresse der Teilnehmer bei dieser Sitzung hat.

## Patentansprüche

1. Verfahren zur Kommunikationsteuerung in einem Netz, demgemäß
für einen Teilnehmer über seinen Netzzugangsknoten, z.B. Ortsamt, eine Nutzkanal-Verbindung zu einem POP des Internets aufgebaut wird,
**dadurch gekennzeichnet,** daß
bei einem während des Bestehens der POP-Verbindung über das Telefonnetz am Netzzugangsknoten für den Teilnehmer
ankommenden Dienst, z.B. Ruf, zunächst vom Ortsamt an den POP eine Information über dieses Ereignis gegeben wird, die dann von dem POP über die Nutzkanal-Verbindung an den Teilnehmer weitergeleitet wird.

2. Verfahren nach Anspruch 1,
**dadurch gekennzeichnet,** daß
die Entscheidung, ob der Teilnehmer einen ankommenden Ruf annehmen will oder nicht, vom POP an das Ortsamt übertragen wird.

3. Verfahren nach Anspruch 2,
**dadurch gekennzeichnet,** daß
bei Annahme des Rufes die bestehende Verbindung zwischen Teilnehmer und POP abgebaut und der Ruf dem Teilnehmer über das Ortsamt zugestellt wird.
